(19) Europäisches Patentamt
European Patent Office
Office européen des brevets

(11) EP 1 326 898 B1

(12) **EUROPÄISCHE PATENTSCHRIFT**

(45) Veröffentlichungstag und Bekanntmachung des Hinweises auf die Patenterteilung:
**12.01.2005 Patentblatt 2005/02**

(21) Anmeldenummer: **01978432.1**

(22) Anmeldetag: **17.10.2001**

(51) Int Cl.[7]: **C08F 2/04**, C08F 220/06, C08F 220/56, C08F 8/00, B01J 19/20

(86) Internationale Anmeldenummer:
**PCT/EP2001/012031**

(87) Internationale Veröffentlichungsnummer:
**WO 2002/032964 (25.04.2002 Gazette 2002/17)**

(54) **VERNETZTES, WASSERQUELLBARES POLYMERISAT UND VERFAHREN ZU SEINER HERSTELLUNG**

CROSS-LINKED, WATER-SWELLABLE POLYMER AND METHOD FOR PRODUCING THE SAME

POLYMERE RETICULE, GONFLANT DANS L'EAU ET SON PROCEDE DE PREPARATION

(84) Benannte Vertragsstaaten:
**AT BE CH CY DE DK ES FI FR GB GR IE IT LI LU MC NL PT SE TR**

(30) Priorität: **19.10.2000 DE 10051940**

(43) Veröffentlichungstag der Anmeldung:
**16.07.2003 Patentblatt 2003/29**

(73) Patentinhaber: **BASF AKTIENGESELLSCHAFT**
**67056 Ludwigshafen (DE)**

(72) Erfinder:
- **HEIDE, Wilfried**
  **67251 Freinsheim (DE)**
- **WICKEL, Stefan**
  **67281 Bissersheim (DE)**
- **DANIEL, Thomas**
  **67165 Waldsee (DE)**
- **STÜVEN, Uwe**
  **65812 Bad Soden (DE)**

(74) Vertreter: **Pohl, Michael, Dr. et al**
**Reitstötter, Kinzebach & Partner (GbR),**
**Patentanwälte,**
**Ludwigsplatz 4**
**67059 Ludwigshafen (DE)**

(56) Entgegenhaltungen:
**WO-A-90/15830** **DE-A- 19 543 368**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 326 898 B1

## Beschreibung

Die vorliegende Erfindung betrifft ein vernetztes, wasserquellbares Polymerisat und ein Verfahren zu seiner Herstellung.

Vernetzte, wasserquellbare Polymerisate, die auch als Hydrogele oder als Superabsorber bezeichnet werden, können ein Vielfaches ihres Eigengewichts an wässrigen Flüssigkeiten absorbieren. Sie werden in großem Umfang in Hygieneartikeln, wie Windeln, Damenbinden und dergleichen eingesetzt. Sie enthalten einpolymerisierte Einheiten wasserlöslicher ethylenisch ungesättigter Monomere, wie Carbonsäuren, Amide und dergleichen. Durch Einbau von Vernetzungsstellen im Polymerisat werden wasserunlösliche Polymerisate erhalten. Der Vernetzungsgrad bestimmt nicht nur die Wasserlöslichkeit der Polymerisate, sondern auch deren Absorptionskapazität und Gelstärke. Gele mit geringer Gelfestigkeit sind nachteilig, da sie unter einem angewandten Druck, z. B. Körperdruck, deformiert werden, wodurch die Porenstruktur des Polymerisats kollabiert und eine weitere Flüssigkeitsaufnahme verhindert wird. Eine erhöhte Gelfestigkeit lässt sich durch eine höhere Vernetzungsdichte erreichen, wodurch allerdings die Absorptionskapazität des Polymerisats verringert wird.

Ein weiteres Kriterium wasserquellbarer Polymere ist ihr extrahierbarer Anteil. Beim Kontakt der wasserquellbaren Polymerisate mit Körperflüssigkeiten werden die extrahierbaren Anteile ausgewaschen, was die Absorptionskapazität verschlechtert. Eine weitere unerwünschte Eigenschaft wasserquellbarer Polymere ist das sogenannte Gel-Blocking. Es tritt auf, wenn Flüssigkeit die Oberfläche der absorbierenden Polymerisatteilchen benetzt und die äußere Hülle anquillt. Dadurch wird eine Sperrschicht ausgebildet, die eine Diffusion von Flüssigkeit ins Partikelinnere erschwert.

Es besteht ein Bedürfnis nach wasserquellbaren Polymerisaten, die eine ausgewogene Balance von hohem Absorptionsvermögen, hoher Gelfestigkeit, hoher Aufnahmegeschwindigkeit (d. h. Abwesenheit von Gel-Blocking) und geringen extrahierbaren Anteilen aufweisen.

Die DE-A 196 46 484 beschreibt flüssigkeitsabsorbierende Polymere, die unter Verwendung einer Vernetzer/Monomerkombination aus drei Komponenten herstellbar sind, wobei es sich bei der ersten Komponente um eine Verbindung mit einer (Meth)allyl- und einer (Meth)acrylsäureesterfunktion, bei der zweiten Komponente um Mono(meth)acrylsäureester oder Mono(meth)allylalkoholether von Polyalkylenglykolen und bei der dritten Komponente um Ester ungesättigter Säuren mit Polyolen oder Di- bzw. Triallylamin oder Bisacrylamide handelt.

Die WO 90/15830 offenbart ein wasserquellbares Hydrokolloidpolymer, das 0,005 bis 0,10 Mol-% eines einpolymerisierten Vernetzergemischs enthält, das einen Bis- oder Trisacryloyl-haltigen ersten Vernetzer und einen unter Bisallylethern, -amiden, -aminen und Triallylamin ausgewählten zweiten Vernetzer im molaren Verhältnis von 1:1,5 bis 1:15 umfasst.

Wasserquellbare Polymerisate können in wirtschaftlicher Weise in einem kontinuierlichen Verfahren hergestellt werden. So lehrt die EP-A-223 063 ein Verfahren zur kontinuierlichen Herstellung von vernetzten feinteiligen gelförmigen Polymerisaten in einem einwelligen zylindrischen Mischer, dessen Mischsegmente eine Förderung der Stoffe vom Anfang zum Ende des zylindrischen Mischers bewirken.

Die DE 199 55 861 beschreibt ein Verfahren zur kontinuierlichen Herstellung von vernetzten feinteiligen gelförmigen Polymerisaten, bei dem eine wässrige Lösung wasserlöslicher monoethylenisch ungesättigter Monomere und Vernetzer einem Mischkneter mit mindestens zwei achsparallel rotierenden Wellen zugeführt wird, wobei Knet- und Transportelemente auf den Wellen des Mischers einen Transport der zugegebenen Stoffe vom Aufgabeende zum distalen Ende des Mischers bewirken. Die entstehende Reaktionswärme wird zum Teil durch Verdampfung von Wasser, durch Produktaustrag und über Kühlung der Reaktorwände abgeführt.

Bei der Herstellung der wasserquellbaren Polymerisate in einem Mischkneter wird die polymerisierende Masse Scherkräften ausgesetzt, die eine Zerteilung der Masse unter Erhalt eines feinteiligen Polymerisats bewirken. Durch das Zerteilen werden in der polymerisierenden Masse neue Oberflächen geschaffen, die eine Wasserverdampfung und eine damit verbundene Abfuhr der Reaktionswärme gestatten. Es hat sich gezeigt, dass das Zerteilungsverhalten der polymerisierenden Masse stark von der Zusammensetzung des Monomerengemischs abhängt. Während bei einer ungünstigen Zusammensetzung im Verlauf der Polymerisation klumpige oder zähelastische Massen angetroffen werden, führt eine günstige Zusammensetzung zu Massen, die zu einem gleichmäßigen feinteiligen Granulat zerbröckeln.

Der vorliegenden Erfindung liegt die Aufgabe zugrunde, vernetzte, wasserquellbare Polymerisate mit einem ausgewogenen Eigenschaftsprofil hinsichtlich Absorptionsvermögen, Gelfestigkeit, Aufnahmegeschwindigkeit und extrahierbaren Anteilen anzugeben, die sich außerdem vorteilhaft in einem kontinuierlichen Verfahren herstellen lassen.

Es wurde nun gefunden, dass unter Verwendung einer Kombination bestimmter Vernetzer in einem bestimmten Mengenverhältnis diese Aufgaben gelöst werden.

Die Erfindung betrifft ein vernetztes, wasserquellbares Polymerisat, das einpolymerisierte Einheiten von

a) wasserlöslichen, monoethylenisch ungesättigten Monomeren und

b) 0,001 bis 5 Mol-% bezogen auf die Monomere a) einer Vernetzerkombination

b1) eines ersten Vernetzers mit wenigstens zwei (Meth)acrylestereinheiten im Molekül und

b2) eines zweiten Vernetzers mit wenigstens zwei (Meth)-allyloxyeinheiten im Molekül,

wobei das molare Verhältnis von b1) zu b2) im Bereich von 0,7:1 bis 10:1 liegt, enthält.

Die Erfindung betrifft außerdem ein Verfahren zur vorzugsweise kontinuierlichen Herstellung von vernetzten, wasserquellbaren Polymerisaten, bei dem man eine wässrige Lösung von

a) wasserlöslichen, monoethylenisch ungesättigten Monomeren und

b) 0,01 bis 5 Mol-% bezogen auf die Monomere a) einer Vernetzerkombination,

b1) eines ersten Vernetzers mit wenigstens zwei (Meth)acrylestereinheiten im Molekül und

b2) eines zweiten Vernetzers mit wenigstens zwei (Meth)-allyloxyeinheiten im Molekül,

wobei das molare Verhältnis von b1) zu b2) im Bereich von 0,7:1 bis 10:1 liegt,

mit einem Feststoffgehalt von 20 bis 80 Gew.-% einer radikalischen initiierten Polymerisation unter fortwährendem Eintrag von Scherenergie unterwirft.

Wasserlösliche, monoethylenisch ungesättigte Monomere der Gruppe a) sind beispielsweise ethylenisch ungesättigte $C_3$-$C_6$-Carbonsäuren, deren Amide und Ester mit Aminoalkoholen der Formel I

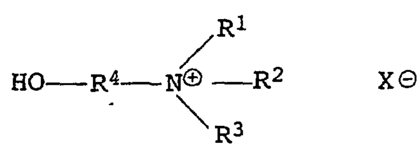

(I)

in der $R^4$ $C_2$- bis $C_5$-Alkylen und $R^1$, $R^2$, $R^3$ unabhängig voneinander Wasserstoff, Methyl, Ethyl, oder Propyl bedeuten. Bei diesen Verbindungen handelt es sich beispielsweise um Acrylsäure, Methacrylsäure, Ethacrylsäure, $\alpha$-Chloracrylsäure, Crotonsäure, Maleinsäure, Maleinsäureanhydrid, Itaconsäure, Citraconsäure, Mesaconsäure, Glutaconsäure, Aconitsäure und Fumarsäure sowie die Alkali- oder Ammoniumsalzen dieser Säuren, Acrylamid, Methacrylamid, Crotonsäureamid, Dimethylaminoethylmethacrylat, Dimethylaminoethylacrylat, Dimethylaminopropylacrylat, Diethylaminopropylacrylat, Dimethylaminobutylacrylat, Dimethylaminoethylmethacrylat, Diethylaminoethylmethacrylat, Dimethylaminoneopentylacrylat und Dimethylaminoneopentylmethacrylat. Die basischen Acrylate und Methacrylate werden in Form der Salze mit starken Mineralsäuren, Sulfonsäuren oder Carbonsäuren oder in quaternisierter Form eingesetzt. Das Anion $X^\ominus$ für die Verbindungen der Formel (I) ist der Säurerest der Mineralsäuren bzw. der Carbonsäuren oder Methosulfat, Ethosulfat oder Halogenid aus einem Quaternisierungsmittel.

Weitere wasserlösliche Monomere der Gruppe a) sind N-Vinylpyrrolidon, Acrylamidopropansulfonsäure, Vinylphosphonsäure und/oder Alkali- bzw. Ammoniumsalze der Vinylsulfonsäure. Die anderen Säuren können ebenfalls entweder in nicht neutralisierter Form oder in partiell bzw. bis zu 100 % neutralisierter Form bei der Polymerisation eingesetzt werden. Als wasserlösliche Monomere der Gruppe a) eignen sich auch N-Vinylimidazoliumverbindungen, wie Salze oder Quaternisierungsprodukte von N-Vinylimidazol und 1-Vinyl-2-methylimidazol, und N-Vinylimidazoline, wie N-Vinylimidazolin, 1-Vinyl-2-methylimidazolin, 1-Vinyl-2-ethylimidazolin oder 1-Vinyl-2-n-propylimidazolin, die ebenfalls in quaternisierter Form oder als Salz bei der Polymerisation eingesetzt werden.

weiterhin kommen weitere monoethylenisch ungesättigte Sulfonoder Phosphonsäuren in Betracht, beispielsweise Allylsulfonsäure, Sulfoethylacrylat, Sulfoethylmethacrylat, Sulfopropylacrylat, Sulfopropylmethacrylat, 2-Hydroxy-3-acryloxypropylsulfonsäure, 2-Hydroxy-3-methacryloxypropylsulfonsäure, Allylphosphonsäure, Styrolsulfonsäure und 2-Acrylamido-2-methylpropansulfonsäure. Die Monomeren können allein oder in Mischung untereinander eingesetzt werden.

Bevorzugte Monomere der Gruppe a) sind Acrylsäure, Methacrylsäure sowie die Alkali- oder Ammoniumsalze dieser Säuren, Acrylamid und/oder Methacrylamid, des Weiteren Vinylsulfonsäure, Acrylamidopropansulfonsäure oder Mischungen dieser Säuren, z. B. Mischungen aus Acrylsäure und Methacrylsäure, Mischungen aus Acrylsäure und

Acrylamidopropansulfonsäure oder Mischungen aus Acrylsäure und Vinylsulfonsäure. Diese Monomere können in jedem beliebigen Verhältnis miteinander copolymerisiert werden.

Die Polymerisation der Monomere der Gruppe a) erfolgt in Gegenwart einer Vernetzerkombination b1) eines ersten Vernetzers mit wenigstens zwei (Meth)acrylestereinheiten im Molekül und b2) eines zweiten Vernetzers mit wenigstens zwei (Meth)allyloxyeinheiten im Molekül, wobei das molare Verhältnis von b1) zu b2) im Bereich von 0,7: 1 bis 10:1, vorzugsweise 1:1 bis 7:1, insbesondere 3:2 bis 5:1, liegt. Die Gesamtmenge an Vernetzer beträgt 0,001 bis 5 Mol-%, vorzugsweise 0,005 bis 0,5 Mol-% bezogen auf die Monomere a).

Geeignete Vernetzer b1) sind in der Regel (Meth)acrylsäureester mehrwertiger Alkohole, die mit bis zu 100, meist bis zu 50, Ethylenoxid- und/oder Propylenoxideinheiten alkoxyliert sein können. Geeignete mehrwertige Alkohole sind insbesondere $C_2$-$C_{10}$-Alkanpolyole mit 2 bis 6 Hydroxylgruppen, wie Ethylenglykol, Glycerin, Trimethylolpropan, Pentaerythrit oder Sorbitol. Bevorzugte Vernetzer b1) sind Polyethylenglykoldiacrylat und Polyethylenglykoldimethacrylate, die sich jeweils von Polyethylenglykolen (die als ethoxyliertes Ethylenglykol aufgefasst werden können) eines Molekulargewichts von 200 bis 2000 ableiten. Weitere verwendbare Vernetzer b1) sind Trimethylolpropantriacrylat, Trimethylolpropantrimethacrylat, Ethylenglykoldiacrylat, Propylenglykoldiacrylat, Butandioldiacrylat, Hexandioldiacrylat, Hexandioldimethacrylat oder Diacrylate und Dimethacrylate von Blockcopolymerisaten aus Ethylenoxid und Propylenoxid.

Als Vernetzer b2) kommen insbesondere Diallylcarbonat, Allylcarbonate oder Allylether mehrwertiger Alkohole, die mit bis zu 100, meist bis zu 50, Ethylenoxid- und/oder Propylenoxideinheiten alkoxyliert sein können, und Allylester mehrwertiger Carbonsäuren in Betracht.

Allylcarbonate mehrwertiger Alkohole entsprechen der allgemeinen Formel

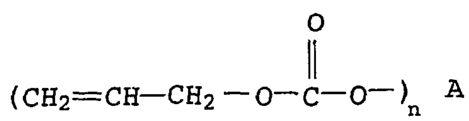

worin

A für den Rest eines mehrwertigen Alkohols steht, der mit bis zu 100, meist bis zu 50, Ethylenoxid- und/oder Propylenoxideinheiten alkoxyliert sein kann; und

n für die wertigkeit des Alkohols, z. B. für eine ganze Zahl von 2 bis 10, vorzugsweise 2 bis 5, steht. Ein besonders bevorzugtes Beispiel einer derartigen Verbindung ist Ethylenglykoldi(allylcarbonat). Weiter eignen sich besonders Polyethylenglykoldi(allylcarbonate), die sich von Polyethylenglykolen eines Molekulargewichts von 200 bis 2000 ableiten.

Als bevorzugte Beispiele für Allylether lassen sich aufführen: Polyethylenglykoldiallylether, die sich von Polyethylenglykolen eines Molekulargewichts von 200 bis 2000 ableiten; Pentraerythrittriallylether oder Trimethylolpropandiallylether. weiterhin geeignet sind Umsetzungsprodukte von Ethylenglykoldiglycidylether oder Polyethylenglykolglycidylether mit 2 Mol Allylalkohol und/oder Pentaerythritoltriallylether.

Ein geeignetes Allylester einer mehrwertigen Carbonsäure ist z. B. Diallylphthalat.

Die Copolymerisation der Monomere der Gruppen a) und b) kann - sofern eine Änderung der Eigenschaften der Copolymerisate gewünscht wird - in Gegenwart weiterer Monomere c) durchgeführt werden. Als Monomere der Gruppe c) kommen beispielsweise Hydroxyethylacrylat, Hydroxypropylacrylat, Hydroxyethylmethacrylat, Hydroxypropylmethacrylat, Acrylnitril und/oder Methacrylnitril in Betracht. Außerdem eignen sich Ester der Acrylsäure oder Methacrylsäure mit 1 bis 18 Kohlenstoffatome enthaltenden einwertigen Alkoholen, z. B. Methylacrylat, Ethylacrylat, Propylacrylat, Isopropylacrylat, n-Butylacrylat, Isobutylacrylat, Hexylacrylat, 2-Ethylhexylacrylat, Stearylacrylat, die entsprechenden Ester der Methacrylsäure, Fumarsäurediethylester, Maleinsäurediethylester, Maleinsäuredimethylester, Maleinsäuredibutylester, Vinylacetat und Vinylpropionat. Sofern die Monomere der Gruppe c) zur Modifizierung der wasserlöslichen Polymerisate verwendet werden, setzt man bis zu 20, z. B. 0,5 bis 20, vorzugsweise 2 bis 10 Mol-% bezogen auf die Monomere a) ein.

Die wasserunlöslichen Monomere können, falls sie bei der Copolymerisation mit eingesetzt werden, mit Hilfe von Emulgatoren in der wässrigen Lösung fein verteilt werden. Geeignete Emulgatoren sind beispielsweise ethoxylierte Nonylphenole, ethoxyliertes Ricinusöl, Alkylsulfate, Sorbitanfettsäureester und Alkylsulfonate. Die Emulgatoren werden in einer Menge von 0 bis 3 Gew.-% bezogen auf die Monomere a) eingesetzt.

Die Polymerisation kann gegebenenfalls in Gegenwart der üblichen Polymerisationsregler erfolgen. Geeignete Polymerisationsregler sind beispielsweise Thioverbindungen, wie Thioglykolsäure, Mercaptoalkohole, z. B. 2-Mercaptoethanol, Mercaptopropanol und Mercaptobutanol, Dodecylmercaptan, Ameisensäure, Ammoniak und Amine, z. B. Ethanolamin, Diethanolamin, Triethanolamin, Triethylamin, Morpholin und Piperidin.

Die Monomere a), b) und gegebenenfalls c) werden im Allgemeinen in 20 bis 80, vorzugsweise 20 bis 50, insbesondere 30 bis 45 gew.-%iger wässriger Lösung in Gegenwart von Polymerisationsinitiatoren miteinander copolymierisiert. Als Polymerisationsinitiatoren können sämtliche unter den Polymerisationsbedingungen in Radikale zerfallende Verbindungen eingesetzt werden, z. B. Peroxide, Hydroperoxide, Wasserstoffperoxid, Persulfate, Azoverbindungen und die sogenannten Redoxkatalysatoren. Bevorzugt ist der Einsatz von wasserlöslichen Initiatoren. In manchen Fällen ist es vorteilhaft, Mischungen verschiedener Polymerisationsinitiatoren zu verwenden, z. B. Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden. Geeignete organische Peroxide sind beispielsweise Acetylacetonperoxid, Methylethylketonperoxid, tert-Butylhydroperoxid, Cumolhydroperoxid, tert-Amylperpivalat, tert-Butylperpivalat, tert-Butylperneohexanoat, tert-Butylperisobutyrat, tert-Butyl-per-2-ethylhexanoat, tert-Butylperisononanoat, tert-Butylpermaleat, tert-Butylperbenzoat, Di-(2-ethylhexyl)peroxydicarbonat, Dicyclohexylperoxydicarbonat, Di-(4-tert-butylcyclohexyl)peroxydicarbonat, Dimyristilperoxydicarbonat, Diacetylperoxydicarbonat, Allylperester, Cumylperoxyneodecanoat, tert-Butylper-3,5,5-trimethylhexanoat, Acetylcyclohexylsulfonylperoxid, Dilaurylperoxid, Dibenzoylperoxid und tert-Amylperneodekanoat. Weitere geeignete Polymerisationsinitiatoren sind wasserlösliche Azostarter, z. B. 2,2'-Azobis-(2-amidinopropan)dihydrochlorid, 2,2'-Azobis-(N,N'-dimethylen)isobutyramidindihydrochlorid, 2-(Carbamoylazo)isobutyronitril, 2,2'-Azobis[2-(2'-imidazolin-2-yl)propan]dihydrochlorid und 4,4'-Azobis-(4-cyanovaleriansäure). Die genannten Polymerisationsinitiatoren werden in üblichen Mengen eingesetzt, z. B. in Mengen von 0,01 bis 5, vorzugsweise 0,05 bis 2,0 Gew.-%, bezogen auf die zu polymerisierenden Monomere.

Als Initiatoren kommen außerdem Redoxkatalysatoren in Betracht. Die Redoxkatalysatoren enthalten als oxidierende Komponente mindestens eine der oben angegebenen Perverbindungen und als reduzierende Komponente beispielsweise Ascorbinsäure, Glukose, Sorbose, Ammonium- oder Alkalimetallhydrogensulfit, -sulfit, -thiosulfat, -hyposulfit, -pyrosulfit oder -sulfid, Metallsalze, wie Eisen(II)-ionen oder Silberionen oder Natriumhydroxymethylsulfoxylat. Vorzugsweise verwendet man als reduzierende Komponente des Redoxkatalysators Ascorbinsäure oder Natriumpyrosulfit. Bezogen auf die bei der Polymerisation eingesetzte Menge an Monomeren verwendet man beispielsweise 1 x $10^{-5}$ bis 1 Mol-% der reduzierenden Komponente des Redoxkatalysators. Anstelle der oxidierenden Komponente des Redoxkatalysators kann man auch einen oder mehrere wasserlösliche Azostarter verwenden.

Bevorzugt wird im erfindungsgemäßen Verfahren ein Redoxsystem, bestehend aus Wasserstoffperoxid, Natriumperoxodisulfat und Ascorbinsäure eingesetzt. In einer üblichen Ausführungsform werden diese Komponenten in den Konzentrationen 1 x $10^{-2}$ Mol-% Wasserstoffperoxid, 0,084 Mol-% Natriumperoxodisulfat und 2,5 x $10^{-3}$ Mol-% Ascorbinsäure bezogen auf die Monomere eingesetzt.

Das Polymerisat wird erhalten, indem man die Polymerisation der obigen Monomere initiiert und die polymerisierende Masse Scherkräften aussetzt. Zum Ausüben von Scherkräften auf die polymerisierende Masse sind Trogkneter oder vorzugsweise kontinuierlich arbeitende Mischkneter geeignet. Die Mischkneter weisen eine oder vorzugsweise wenigstens zwei achsparallel rotierende Wellen auf, auf denen sich Knet- und Transportelemente befinden, die eine Förderung der am Aufgabeende des Mischkneters zugeführten Stoffe in axialer Richtung zur Auswurföffnung am distalen Ende bewirken.

Im erfindungsgemäßen Verfahren einsetzbare Mischkneter sind von der Fa. List erhältlich und beispielsweise in der CH-A-664 704, EP-A-517 068, WO 97/12666, DE-A-21 23 956, EP-A-603 525, DE-A-195 36 944 und DE-A-4 118 884 beschrieben.

Solche Kneter mit zwei Wellen erzielen durch die Anordnung der Knet- und Transportelemente eine hohe Selbstreinigung, die für eine kontinuierliche Polymerisation eine wichtige Anforderung ist. vorzugsweise rotieren die beiden Wellen gegenläufig zueinander. Auf der Rührwelle sind die Scheibensegmente propellerartig angeordnet. Als Knet- und Transportelemente sind z. B. wandgängige Mischbarren sowie L- oder U-förmig ausgeformte Aufsätze geeignet.

Der Mischkneter kann nach Bedarf beheizt oder gekühlt werden. Die Monomerlösung wird darin im Allgemeinen bei einer Temperatur im Bereich von 0 bis 140 °C und unter Normaldruck polymerisiert. Bevorzugt beträgt die Temperatur 20 bis 120 °C und insbesondere 40 bis 120 °C. Die maximale Temperatur beträgt bei einer bevorzugten Verfahrensvariante mindestens 70 °C, besonders bevorzugt mindestens 80 °C und insbesondere mindestens 90 °C, die Abgastemperatur mindestens 60 °C, besonders bevorzugt mindestens 80 °C und insbesondere mindestens 90 °C und die Produkttemperatur beim Austrag aus dem Reaktor mindestens 60 °C, besonders bevorzugt mindestens 75 °C und insbesondere mindestens 85 °C.

Die bei der Polymerisation entstehende Reaktionswärme wird durch Verdampfung von Wasser aus dem Reaktionsgemisch, durch Produktaustrag und gegebenenfalls Kühlung der Reaktorwände abgeführt, wobei der Anteil der Wärmeabfuhr durch Verdampfung von Wasser vorzugsweise wenigstens 5 % und der Anteil der Wärmeabfuhr durch Produktaustrag vorzugsweise wenigstens 25 % der Reaktionswärme beträgt.

Bevorzugt wird das erfindungsgemäße Verfahren so durchgeführt, dass der Anteil der Wärmeabfuhr durch Verdampfung von Wasser aus dem Reaktionsgemisch mindestens 30 %, bevorzugt mindestens 40 % der Reaktionswärme beträgt.

Bevorzugt werden Verfahren, bei denen die Reaktionswärme zu insgesamt mindestens 50 %, besonders bevorzugt zu mindestens 70 % und insbesondere zu mindestens 90 % durch Produktaustrag und Wasserverdampfung

abgeführt wird.

Der Einsatz einer definierten Vernetzerkombination gemäß den erfindungsgemäßen Verfahren gestattet sogar, ganz auf die Mantelkühlung zu verzichten. Nach dieser bevorzugten Verfahrensvariante findet keine Wärmeabfuhr über die Kühlung der Reaktorwände statt.

Während die Monomerlösung unmittelbar zu Beginn der Polymerisation in flüssiger Form vorliegt, geht die Konsistenz der Reaktionsmischung über einen hochviskosen Zustand in ein krümeliges Gel über. Bei der Polymerisation entsteht ein Gel, das unter Einwirkung der Scherkräfte zu einem feinteiligen krümeligen Gel zerteilt wird. Bei Verwendung eines kontinuierlich arbeitenden Mischkneters wird das Gel durch die Förderwirkung des Mischers am Ende des Mischers ausgetragen. Bei Verwendung eines Trogkneters wird der Kneter abgestellt und entleert, sobald das Gel die gewünschte Konsistenz erreicht hat.

Die wässrige Monomerlösung kann den Initiator gelöst oder dispergiert enthalten. Die Initiatoren können bei Verwendung eines kontinuierlich arbeitenden Mischkneters auch getrennt von der Monomerlösung dem Mischkneter zugeführt werden.

Die Monomerlösung wird vor der Polymerisation zweckmäßigerweise von Restsauerstoff befreit. Dies geschieht mittels Inertgas, welches im Gleichstrom, Gegenstrom oder dazwischenliegenden Eintrittswinkeln eingeleitet werden kann. Eine gute Durchmischung kann beispielsweise mit Düsen, statischen oder dynamischen Mischern oder Blasensäulen erzielt werden.

Bei Verwendung eines kontinuierlich arbeitenden Mischkneters wird die Monomerlösung mit einem Inertgasstrom durch den Reaktor geführt. Bevorzugt beträgt der Massendurchsatz an Monomerlösung mindestens 1000, besonders bevorzugt mindestens 2000 und insbesondere mindestens 3000 $kg/hm^3$ (Reaktorvolumen) und der Inertgasstrom mindestens 100 $l/hm^3$ (Reaktorvolumen).

Als Inertgase können unabhängig voneinander Stickstoff, ein Edelgas wie Argon, Kohlenmonoxid, Kohlendioxid, Schwefelhexafluorid oder Mischungen dieser Gase verwendet werden. Dabei ist es möglich, das Inertgas ganz oder teilweise durch eine chemische Reaktion im Mischkneter zu erzeugen. Bevorzugt wird Stickstoff als Inertgas eingesetzt.

Das Reaktorvolumen kann je nach gewünschtem Umsatz variieren. Vorzugsweise beträgt das Reaktorvolumen mindestens 0,1 $m^3$, besonders bevorzugt 0,2 bis 20 $m^3$ und insbesondere 0,2 bis 12 $m^3$.

Das bei der Polymerisation anfallende Gel hat einen Wassergehalt von 0 bis 80 Gew.-% bevorzugt 40 bis 70 Gew.-%. Dieser relativ geringe Feuchtigkeitsgehalt bei bereits rieselfähigem Gel, das nicht verklumpt, senkt die anschließend zur Trocknung aufzubringende Energie.

Das Herstellverfahren zeichnet sich durch geringe Verweilzeiten im Reaktor und damit durch eine gute Raum/Zeit-Ausbeute aus. So werden selbst bei Verweilzeiten unter 30 Minuten bei einem Reaktorvolumen von 300 l feinteilige gelförmige Polymerisate mit einem sehr geringen Restmonomergehalt gefunden. Dies erspart die sonst aufwendigen Abtrennverfahren und erhöht die Ausbeute. Besonders bevorzugt werden Verfahrensvarianten mit einem hohen Massendurchsatz, der Verweilzeiten unter 20 Minuten und sogar unter 10 Minuten ermöglicht.

Durch mehrstündiges Nachheizen der Polymerisatgele im Temperaturbereich 50 bis 120 °C, vorzugsweise 70 bis 100 °C, können die Qualitätseigenschaften der Polymerisate noch verbessert werden. Das den Reaktor verlassende Polymergel wird im Anschluss in einem Verweilbehälter bei Temperaturen von 50 bis 120 °C, vorzugsweise 80 bis 100 °C gelagert. Die Verweilzeit beträgt in der Regel 0 bis 3 Stunden, vorzugsweise 5 bis 30 Minuten. Der Behälter kann ein nach oben offener Behälter sein; möglich ist jedoch auch ein verschlossener Behälter, an dem ein leichtes Vakuum angelegt wird.

Der Trocknungsschritt kann nach allen bekannten Verfahrensweisen erfolgen, z. B. in einer Wirbelschicht, auf einem Umlufttrocknungsband, Vakuumtrocknungsband oder mit Hilfe einer Mikrowellentrocknung, oder bevorzugt unter vermindertem Druck in einem einwelligen Kneter unter intensivem Durchkneten des Polymergels. Dieser Trocknungsschritt wird vorzugsweise in einem ein- oder mehrwelligen Kneter bei einem Druck von 5 bis 300 mbar, vorzugsweise 20 bis 70 mbar und Temperaturen von 30 bis 170 °C durchgeführt.

Die erhaltenen Polymerisate können zweckmäßigerweise oberflächennachvernetzt werden. Die Oberflächennachvernetzung kann in an sich bekannter Weise mit getrockneten, gemahlenen und abgesiebten Polymerpartikeln durchgeführt werden.

Hierzu werden Verbindungen, die mit den funktionellen Gruppen der Polymerisate unter Vernetzung reagieren können, vorzugsweise in Form einer wässrigen Lösung auf die Oberfläche der Polymerisatpartikel aufgebracht. Die wässrige Lösung kann neben Wasser wassermischbare organische Lösungsmittel enthalten. Geeignete Lösungsmittel sind Alkohole wie Methanol, Ethanol, Isopropanol oder Aceton.

Geeignete Nachvernetzungsmittel sind beispielsweise

- Di- oder Polyglycidylverbindungen wie Phosphonsäurediglycidylether oder Ethylenglykoldiglycidylether, Bischlorhydrinether von Polyalkylenglykolen,

- Alkoxysilylverbindungen,

- Polyaziridine, Aziridin-Einheiten enthaltende Verbindungen auf Basis von Polyethern oder substituierten Kohlenwasserstoffen, beispielsweise Bis-N-aziridinomethan,

- Polyamine oder Polyamidoamine sowie deren Umsetzungsprodukte mit Epichlorhydrin,

- Polyole wie Ethylenglykol, 1,2-Propandiol, 1,4-Butandiol, Glycerin, Methyltriglykol, Polyethylenglykole mit einem mittleren Molekulargewicht $M_w$ von 200 bis 10000, Di- und Polyglycerin, Pentraerythrit, Sorbit, die Oxethylate dieser Polyole sowie deren Ester mit Carbonsäuren oder der Kohlensäure wie Ethylencarbonat oder Propylencarbonat,

- Kohlensäurederivate wie Harnstoff, Thioharnstoff, Guanidin, Dicyandiamid, 2-Oxazolidinon und dessen Derivate, Bisoxazolin, Polyoxazoline, Di- und Polyisocyanate,

- Di- und Poly-N-methylolverbindungen wie beispielsweise Methylenbis(n-methylolmethacrylamid) oder Melamin-Formaldehyd-Harze,

- Verbindungen mit zwei oder mehr blockierten Isocyanatgruppen wie beispielsweise Trimethylhexamethylendiisocyanat blockiert mit 2,2,3,6-Tetramethylpiperidinon-4.

Bei Bedarf können saure Katalysatoren wie beispielsweise p-Toluolsulfonsäure, Phosphorsäure, Borsäure oder Ammoniumdihydrogenphosphat zugesetzt werden.

Besonders geeignete Nachvernetzungsmittel sind Di- oder Polyglycidylverbindungen wie Ethylenglykoldiglycidylether, die Umsetzungsprodukte von Polyamidoaminen mit Epichlorhydrin und 2-Oxazolidinon.

Das Aufbringen der Vernetzerlösung erfolgt bevorzugt durch Aufsprühen einer Lösung des Vernetzers in herkömmlichen Reaktionsmischern oder Misch- und Trocknungsanlagen wie beispielsweise Patterson-Kelly-Mischer, DRAIS-Turbulenzmischer, Lödige-Mischer, Schneckenmischer, Tellermischer, Wirbelschichtmischer und Schugi-Mix. Nach Aufsprühen der Vernetzerlösung kann ein Temperaturbehandlungsschritt nachfolgen, bevorzugt in einem nachgeschalteten Trockner, bei einer Temperatur zwischen 80 und 230 °C, bevorzugt 80 bis 190 °C, und besonders bevorzugt zwischen 100 und 160 °C, über einen Zeitraum von 5 Minuten bis 6 Stunden, bevorzugt 10 Minuten bis 2 Stunden und besonders bevorzugt 10 Minuten bis 1 Stunde, wobei sowohl Spaltprodukte als auch Lösungsmittelanteile entfernt werden können. Die Trocknung kann aber auch im Mischer selbst erfolgen, durch Beheizung des Mantels oder Einblasen eines vorgewärmten Trägergases.

Die erfindungsgemäß eingesetzte Vernetzerkombination führt zu wasserquellbaren Polymerisaten mit einer Kombination hochwertiger Hydrogeleigenschaften, wie hohem Absorptionsvermögen auch unter Druckbelastung sowie niedrigen extrahierbaren Anteilen. Durch die Einwirkung von Scherkräften bei der Polymerisation im erfindungsgemäßen Verfahren werden Polymerisatpartikel erhalten, die eine vorteilhafte Morphologie aufweisen. Die Polymerisatpartikel fallen als feinflockiges Produkt an, das deutlich verbesserte Trocknungseigenschaften aufweist. Wie durch die folgenden Vergleichsbeispiele und Beispiele gezeigt wird, zerfällt das polymerisierende Gel durch die Einwirkung der Scherkräfte ohne weitere äußere Krafteinwirkung im Verlauf des erfindungsgemäßen Verfahrens zu einem feinteiligen Pulver. Nicht erfindungsgemäße Vernetzer und Vernetzerkombinationen führen zu bröckeligen, zähelastischen oder schleimigen Produkten. Durch das Zerfallen der polymerisierenden Masse werden neue Oberflächen generiert. Dadurch steigt der Beitrag der Kühlung durch Wasserverdampfung an der Abfuhr der Polymerisationswärme. Dies führt zu einer verbesserten Wirtschaftlichkeit des Herstellungsverfahrens. Neben der Vereinfachung des Herstellungsverfahrens werden sowohl die Trocknung als auch die anschließende Mahlung erleichtert.

Vermutlich beruht die Wirkungsweise der erfindungsgemäß eingesetzten vernetzerkombination auf der unterschiedlichen Reaktivität der beiden eingesetzten Vernetzertypen. Der Vernetzer b1) weist acrylische Unsättigung auf, während der zweite Vernetzer allylische Unsättigung aufweist. Die Reaktivität der ersteren ist dabei wesentlich stärker ausgeprägt als die der letzteren. Vermutlich reagieren die acrylischen Vernetzer in der frühen Phase der Polymerisation rasch und in statistischer Verteilung mit den übrigen Monomeren, wobei hochvernetzte Polymerisatinseln entstehen. Aufgrund der geringeren Reaktivität der allylischen Vernetzer steht auch im weiteren Verlauf der Polymerisation genug Vernetzer zur Verfügung, um die hochvernetzten Inseln über ein weitmaschiges Gefüge zu vernetzen bzw. Bindungsbrüche, die durch die Einwirkung der Scherkräfte im erfindungsgemäßen Herstellungsverfahren verursacht werden, "auszuheilen".

Die Erfindung wird nun durch die folgenden Beispiele und Vergleichsbeispiele näher veranschaulicht. Es wurden folgende Testmethoden angewandt:

Zentrifugenretentionskapazität (CRC Centrifuge Retention Capacity)

Bei dieser Methode wird die freie Quellbarkeit des Hydrogels im Teebeutel bestimmt. Zur Bestimmung der CRC werden 0,200 ± 0,0050 g getrocknetes Hydrogel (Kornfraktion 106 - 850 µm) in einem 60 x 85 mm großen Teebeutel eingewogen, der anschließend verschweißt wird. Der Teebeutel wird für 30 Minuten in einen Überschuss von 0,9 gew.-%iger Kochsalzlösung gegeben (mindestens 0,83 l Kochsalzlösung/1 g Polymerpulver). Anschließend wird der Teebeutel 3 Minuten lang bei 250 g zentrifugiert. Die Bestimmung der vom Hydrogel festgehaltenen Flüssigkeitsmenge geschieht durch Auswägen des zentrifugierten Teebeutels.

Absorption unter Druck (AUL Absorbency Under Load) 0,7 psi (4826,5 Pa)

Die Messzelle zur Bestimmung der AUL 0,7 psi ist ein Plexiglas-Zylinder mit einem Innendurchmesser von 60 mm und einer Höhe von 50 mm, der an der Unterseite einen angeklebten Edelstahl-Siebboden mit einer Maschenweite von 36 µm besitzt. Zu der Messzelle gehört weiterhin eine Plastikplatte mit einem Durchmesser von 59 mm und ein Gewicht, welches zusammen mit der Plastikplatte in die Messzelle hineingestellt werden kann. Das Gewicht der Plastikplatte und das Gewicht betragen zusammen 1345 g. Zur Durchführung der Bestimmung der AUL 0,7 psi wird das Gewicht des leeren Plexiglas-Zylinders und der Plastikplatte ermittelt und als $W_0$ notiert. Dann werden 0,900 ± 0,005 g Hydrogel-formendes Polymer (Korngrößenverteilung 150 - 800 µm) in den Plexiglas-Zylinder eingewogen und möglichst gleichmäßig auf dem Edelstahl-Siebboden verteilt. Anschließend wird die Plastikplatte vorsichtig in den Plexiglas-Zylinder hineingelegt und die gesamte Einheit gewogen; das Gewicht wird als $W_a$ notiert. Nun wird das Gewicht auf die Plastikplatte in dem Plexiglas-Zylinder gestellt. In die Mitte der Petrischale mit einem Durchmesser von 120 mm und einer Höhe von 30 mm wird eine keramische Filterplatte mit einem Durchmesser von 120 mm und einer Porosität 0 gelegt und soviel 0,9 gew-%ige Natriumchloridlösung eingefüllt, dass die Flüssigkeitsoberfläche mit der Filterplattenoberfläche abschließt, ohne dass die Oberfläche der Filterplatte benetzt wird. Anschließend wird ein rundes Filterpapier mit einem Durchmesser von 90 mm und einer Porengröße < 20 µm (S&S 589 Schwarzband von Schleicher & Schüll) auf die keramische Platte gelegt. Der Hydrogel-formendes Polymer enthaltende Plexiglas-Zylinder wird mit Plastikplatte und Gewicht nun auf das Filterpapier gestellt und dort für 60 Minuten belassen. Nach dieser Zeit wird die komplette Einheit aus der Petrischale vom Filterpapier herausgenommen und anschließend das Gewicht aus dem Plexiglas-Zylinder entfernt. Der gequollenes Hydrogel enthaltende Plexiglas-Zylinder wird zusammen mit der Plastikplatte ausgewogen und das Gewicht als $W_b$ notiert.

Die Absorption unter Druck (AUL) wird wie folgt berechnet:

$$\text{AUL 0,7 psi [g/g]} = [W_b - W_a]/[W_a - W_0]$$

Herstellung von Polymerisaten

Eine 40 gew.-%ige Monomerlösung, bestehend aus Acrylsäure und Natriumacrylat mit einem Neutralisationsgrad der Acrylsäure von 77 Mol-% wurde verwendet (Spezifikation der Acrylsäure: mindestens 99,5 Gew.-% Acrylsäure, maximal 0,1 Gew.-% Wasser, maximal 500 ppm Diacrylsäure, 180 - 200 ppm Monomethylhydrochinonether, < 2000 ppm Essigsäure, < 600 ppm Propionsäure). Nach der Neutralisation wurde die Mischung maximal 6 Stunden gelagert, bevor sie zur Polymerisation eingesetzt wurde. Zur Initiierung wurde folgendes System verwendet:

0,005 Gew.-% Wasserstoffperoxid und
0,006 Gew.-% Ascorbinsäure und
0,28 Gew.-% Natriumperoxodisulfat,

wobei alle Mengenangaben auf die in der Reaktionslösung vorhandenen Monomere, ausgedrückt als Acrylsäure, bezogen sind. Es wurden die in der nachstehenden Tabelle angegebenen Mengen an Vernetzer eingesetzt (Gew.-%, bezogen auf Acrylsäure). Die Vernetzer wurden zusammen mit der wässrigen Monomerlösung gemischt und diese Lösung durch Einleiten von Stickstoff inertisiert.

Die einzelnen Komponenten dieser Reaktionslösung (verdünnte wässrige Lösungen von Wasserstoffperoxid, Ascorbinsäure, Natriumperoxodisulfat und die Monomer/Vernetzerlösung) wurden getrennt in einen Knetreaktor (List ORP 250-Contikneter, Fa. List, Arisdorf, Schweiz) eindosiert und dort während des Einlaufens im Reaktor gemischt, wobei die Polymerisation schon während des Mischens zügig startete.

Es wurden 600 kg/h Reaktionslösung eingebracht, und das im Kneter durch Polymerisation erzeugte Gel wurde kontinuierlich ausgetragen. Die Temperatur des Kühlwassers im Reaktormantel wurde auf 90 °C geregelt. Während der Polymerisation wurden 14 $m^3$/h Stickstoff als Inertgas durch den Kneter geführt. Das Reaktionsvolumen betrug

300 l.

Das ausgetragene Gel wurde getrocknet, gemahlen und durch Sieben eine Korngrößenfraktion von 100 - 800 µm erhalten. Die zentrifugenretentionskapazität und die extrahierbaren Anteile sind in der Tabelle angegeben.

Oberflächennachvernetzung:

20 g Polymer (Korngrößenfraktion 100 - 800 µm) wurden in einem Labormischer (Waring-Mischer) mit Mischaufsatz und abgestumpften Mischblättern vorgelegt. Bei eingeschaltetem Mischer und niedriger Umdrehungszahl wurden 1 g Nachvernetzungslösung (12 mg Ethylenglykoldiglycidylether in einer Mischung aus 33 Gew.-% 1,2-Propylenglykol und 67 Gew.-% Wasser) zudosiert. Das feuchte Polymerpulver wurde danach dem Mischer entnommen und in einer Petrischale bei 150 °C 60 Minuten lang im Umluftschrank getrocknet. Nach Absieben der Grobfraktion (800 µm) wurde das erhaltene Produkt untersucht. Die Ergebnisse sind in der Tabelle angegeben.

Tabelle

| | Vernetzer 1 | Vernetzer 2 | Gelkonsistenz | Grundpolymer | | Nachvernetztes Polymer | | | | |
|---|---|---|---|---|---|---|---|---|---|---|
| | | | | CRC | Ext. 16h | pH | CRC | AUL 0,5 psi | AUL 0,7 psi | Ext. 16h |
| Vgl.-bsp.1 | PEGDA-400 0,50% | keiner | bröckelig, gelblich | 33,5 | 9,4% | 6,07 | 31,1 | 28,3 | 25,5 | 7,5% |
| Vgl.-bsp.2 | Tetraallyloxyethan 0,50% | keiner | sehr klumpig | 44,4 | 34,4% | | | | | |
| Bsp.1 | PEGDA-400 0,40% | P-30, 0,10% | flockig, weiß | 26,8 | 4,0% | 5,87 | 24,9 | 25,3 | 24,1 | 2,4% |
| Bsp.2 | PEGDA-400 0,40% | AC, 0,10% | flockig, weiß | 30,7 | 6,6% | 6,05 | 27,7 | 27,4 | 25,0 | 3,9% |
| Bsp.3 | PEGDA-400 0,40% | PEG-AA-400 0,10% | flockig, weiß | 32,9 | 8,8% | 6,04 | 28,2 | 28,2 | 25,0 | 5,7% |

PEGDA-400 = Polyethylenglykoldiacrylat 400
PEG-AA-400 = Polyethylenglykoldiallylether 400
P-30 = Pentaerythritoltriallylether
AC = Diethylenglykolbis(allylcarbonat)

## Patentansprüche

**1.** Vernetztes, wasserquellbares Polymerisat, enthaltend einpolymerisierte Einheiten von

a) wasserlöslichen, monoethylenisch ungesättigten Monomeren und

b) 0,001 bis 5 Mol-% bezogen auf die Monomere a) einer Vernetzerkombination

b1) eines ersten Vernetzers mit wenigstens zwei (Meth)acrylestereinheiten im Molekül und

b2) eines zweiten Vernetzers mit wenigstens zwei (Meth)allyloxyeinheiten im Molekül,

wobei das molare Verhältnis von b1) zu b2) im Bereich von 0,7:1 bis 10:1 liegt.

**2.** Polymerisat nach Anspruch 1, wobei die Monomere a) unter Acrylsäure, Methacrylsäure, den Alkali- oder Ammoniumsalzen dieser Säuren, Acrylamid und/oder Methacrylamid ausgewählt sind.

**3.** Polymerisat nach Anspruch 1 oder 2, wobei der erste Vernetzer unter (Meth)acrylsäureestern mehrwertiger Alkohole, die mit bis zu 100 Ethylenoxid- und/oder Propylenoxideinheiten alkoxyliert sein können, ausgewählt ist.

**4.** Polymerisat nach Anspruch 3, wobei der mehrwertige Alkohol unter Ethylenglykol, Glycerin, Trimethylolpropan, Pentaerythrit und/oder Sorbitol ausgewählt ist.

**5.** Polymerisat nach einem der vorhergehenden Ansprüche, wobei der zweite Vernetzer unter Diallylcarbonat, Allylcarbonaten und Allylethern mehrwertiger Alkohole, die mit bis zu 100 Ethylenoxid- und/oder Propylenoxideinheiten alkoxyliert sein können, und Allylestern mehrwertiger Carbonsäuren ausgewählt ist.

**6.** Verfahren zur Herstellung von vernetzten, wasserquellbaren Polymerisaten, bei dem man eine wässrige Lösung von

a) wasserlöslichen, monoethylenisch ungesättigten Monomeren und

b) 0,01 bis 5 Mol-% bezogen auf die Monomere a) einer Vernetzerkombination,

b1) eines ersten Vernetzers mit wenigstens zwei (Meth)acrylestereinheiten im Molekül und

b2) eines zweiten Vernetzers mit wenigstens zwei (Meth)allyloxyeinheiten im Molekül,

wobei das molare Verhältnis von b1) zu b2) im Bereich von 0,7:1 bis 10:1 liegt,

mit einem Feststoffgehalt von 20 bis 80 Gew.-% einer radikalischen initiierten Polymerisation unter fortwährendem Eintrag von Scherenergie unterwirft.

**7.** Verfahren nach Anspruch 6, bei dem man die wässrige Lösung zusammen mit einem Initiator und gegebenenfalls einem Inertgas kontinuierlich einem Mischkneter mit mindestens zwei achsparallel rotierenden Wellen zuführt, auf denen sich Knetund Transportelemente befinden, die eine Förderung in axialer Richtung bewirken.

**8.** Verfahren nach Anspruch 6 oder 7, bei dem die bei der Polymerisation entstehende Reaktionswärme durch Verdampfung von Wasser aus dem Reaktionsgemisch, durch Produktaustrag und gegebenenfalls Kühlung abgeführt wird, wobei der Anteil der Wärmeabfuhr durch Verdampfung von Wasser wenigstens 5 % und der Anteil der Wärmeabfuhr durch Produktaustrag wenigstens 25 % der Reaktionswärme beträgt.

## Claims

**1.** Crosslinked water-swellable addition polymer containing polymerized units of

a) water-soluble monoethylenically unsaturated monomers, and

b) from 0.001 to 5 mol% based on the monomers a) of a crosslinker combination

b1) of a first crosslinker containing at least two (meth)acrylic ester units in the molecule and

b2) of a second crosslinker containing at least two (meth)allyloxy units in the molecule,

the molar ratio of b1) to b2) being in the range from 0.7:1 to 10:1.

**2.** Polymer as claimed in claim 1, wherein the monomers a) are selected from the group consisting of acrylic acid, methacrylic acid, the akali metal or ammonium salts of these acids, acrylamide and/or methacrylamide.

**3.** Polymer as claimed in claim 1 or 2, wherein the first crosslinker is selected from the group consisting of (meth) acrylic esters of polyhydric alcohols which may have been alkoxylated with up to 100 ethylene oxide and/or propylene oxide units.

**4.** Polymer as claimed in claim 3, wherein the polyhydric alcohol is selected from the group consisting of ethylene glycol, glycerol, trimethylolpropane, pentaerythritol and/or sorbitol.

**5.** Polymer as claimed in any preceding claim, wherein the second crosslinker is selected from the group consisting of diallyl carbonate, allyl carbonates and allyl ethers of polyhydric alcohols which may have been alkoxylated with up to 100 ethylene oxide and/or propylene oxide units and allyl esters of polybasic carboxylic acids.

**6.** A process for preparing crosslinked water-swellable addition polymers, which comprises an aqueous solution of

a) water-soluble monoethylenically unsaturated monomers, and

b) from 0.01 to 5 mol% based on the monomers a) of a crosslinker combination

b1) of a first crosslinker containing at least two (meth)acrylic ester units in the molecule and

b2) of a second crosslinker containing at least two (meth)allyloxy units in the molecule,

the molar ratio of b1) to b2) being in the range from 0.7:1 to 10:1.

having a solids content in the range from 20 to 80% by weight being subjected to a free-radically initiated addition polymerization with continuous input of shearing energy.

**7.** A process as claimed in claim 6, which includes a step of feeding the aqueous solution together with an initiator and optionally an inert gas continuously into a mixing kneader having at least two axially parallel rotating shafts equipped with a plurality of kneading and transporting elements effective in providing conveyance in the axial direction.

**8.** A process as claimed in claim 6 or 7, wherein the heat of reaction due to the addition polymerization is removed by evaporation of water from the reaction mixture, by product discharge and, if necessary, cooling subject to the proviso that the fraction of heat removed by evaporation of water is not less than 5% of the heat of reaction and the fraction of heat removed by product discharge is not less than 25% of the heat of reaction.

## Revendications

**1.** Polymère réticulé gonflant dans l'eau, contenant des unités copolymérisées de

a) monomères monoéthyléniquement insaturés solubles dans l'eau et
b) 0,001 à 5% molaires, par rapport aux monomères a), d'une combinaison de réticulants

b1) d'un premier réticulant comportant au moins deux unités d'ester (méth)acrylique par molécule et
b2) d'un second réticulant comportant au moins deux unités (méth)allyloxy par molécule,

la proportion molaire de b1) à b2) étant de l'ordre de 0,7 : 1 à 10 : 1.

**2.** Polymère selon la revendication 1, dans lequel les monomères a) sont choisis parmi l'acide acrylique, l'acide méthacrylique, les sels de métaux alcalins ou d'ammonium de ces acides, l'acrylamide et/ou le méthacrylamide.

**3.** Polymère selon la revendication 1 ou 2, dans lequel le premier réticulant est choisi parmi des esters (méth)acryliques d'alcools polyvalents, qui peuvent être alcoxylés par jusqu'à 100 unités d'oxyde d'éthylène et/ou d'oxyde de propylène.

**4.** Polymère selon la revendication 3, dans lequel l'alcool polyvalent est choisi parmi l'éthylène glycol, le glycérol, le triméthylolpropane, le pentaérythritol et/ou le sorbitol.

**5.** Polymère selon l'une quelconque des revendications qui précèdent, dans lequel le second réticulant est choisi parmi du carbonate de diallyle, des carbonates d'allyle et des éthers allyliques d'alcools polyvalents, qui peuvent être alcoxylés par jusqu'à 100 unités d'oxyde d'éthylène et/ou d'oxyde de propylène, et des esters allyliques d'acides carboxyliques polyvalents.

**6.** Procédé de préparation de polymères réticulés gonflant dans l'eau, dans lequel une solution aqueuse de

a) monomères monoéthyléniquement insaturés solubles dans l'eau et
b) 0,01 à 5% molaires, par rapport aux monomères a), d'une combinaison de réticulants

b1) d'un premier réticulant comportant au moins deux unités d'ester (méth)acrylique par molécule et
b2) d'un second réticulant comportant au moins deux unités (méth)allyloxy par molécule,

la proportion molaire de b1) à b2) étant de l'ordre de 0,7 : 1 à 10 : 1,
et d'une teneur en solides de 20 à 80% en poids, est soumise à une polymérisation radicalaire avec apport constant d'énergie de cisaillement.

**7.** Procédé selon la revendication 6, dans lequel on envoie la solution aqueuse, en même temps qu'un initiateur et éventuellement un gaz inerte, en continu, dans un malaxeur de mélange à au moins deux axes rotatifs à axes parallèles, sur lesquels se trouvent des éléments de malaxage et de transport, lesquels induisent un transport en direction axiale.

**8.** Procédé selon la revendication 6 ou 7, dans lequel la chaleur de réaction générée lors de la polymérisation est dissipée par évaporation d'eau hors du mélange réactionnel, par décharge de produit et éventuellement par refroidissement, la fraction de chaleur dissipée par évaporation d'eau étant d'au moins 5% et la fraction de chaleur dissipée par décharge de produit étant d'au moins 25% de la chaleur de réaction.